Europäisches Patentamt

European Patent Office

Office européen des brevets

(11) Publication number: **0 345 567**
A1

# EUROPEAN PATENT APPLICATION

(21) Application number: 89109536.6

(22) Date of filing: 26.05.89

(51) Int. Cl.⁴: **B60M 1/234 , H02G 7/14**

(30) Priority: 09.06.88 IT 2091388

(43) Date of publication of application:
**13.12.89 Bulletin 89/50**

(84) Designated Contracting States:
**AT BE CH DE ES FR GB GR IT LI LU NL SE**

(71) Applicant: **A. Salvi & C. S.p.a.**
**Via E. Cosenz, 32**
**I-20157 Milano(IT)**

(72) Inventor: **Diana, Giorgio**
**Via Bassini, 23**
**I-20133 Milano(IT)**

(74) Representative: **Faggioni, Giovanmaria, Dr. et al**
**Fumero-Studio Consulenza Brevetti**
**Widenmayerstrasse 4/I**
**D-8000 München 22(DE)**

(54) **Vibration damper for railway overhead electric lines.**

(57) The invention concerns an overhead electric line of a railway, comprising a catenary suspension cable, a contact conductor positioned essentially on a straight line and a plurality of hangers for suspending said conductor to the catenary, said line being equipped with a device for damping the oscillations, formed of a messenger cable anchored, substantially at its centre, to a clamp of connection to the electric line and carrying at its ends springing counterweights. According to the invention, the damping device has an overall mass of 1/15 to 1/30 the mass of the electric line of one bay, and a damping coefficient of 5 to 15% for frequencies of the order of 1 Hz. Said damping device is anchored to the catenary cable, substantially at the centre of each bay.

Fig.2

# VIBRATION DAMPING DEVICE FOR RAILWAY OVERHEAD ELECTRIC LINES, AND ELECTRIC LINE EQUIPPED WITH SAID DEVICE

The present invention concerns an overhead electric line of a railway, especially railways along which travel very fast trains, and a device designed to dampen the vibrations produced on said line by the passage of the trolley pantographs of the train locomotives.

It is known that the sliding of the locomotive pantographs in contact with the overhead electric power supply line produces on this latter, after passage, a free vibration or oscillation which also affects the catenary and which normally dampens in about ten seconds.

Up to date, these vibrations have not caused too much worry, since the inconveniences they can create on the line are practically negligible. Nevertheless, the coming into function of very fast trains (travelling for instance at 250 km/h and more), driven by highly powerful locomotives, has forcedly given rise to quite a serious drawback tied to the fact that - in order to satisfy the high electrical input of the locomotive engines - it has been necessary to make use of two pantographs for each locomotive, instead of only one. It has in fact been noticed that the free oscillation or vibration, produced on the line by the passage of the first pantograph, though being inclined to self-dampen, has not yet died out at the passage of the second pantograph.

Since the dynamic response of pantographs does not normally allow them to follow said vibrations of the line, it is evident that the contact between the second pantograph and the line itself, in such conditions, is not guaranteed with the required continuity and stability. It can easily be understood how this may cause great difficulties in the power supply of locomotive engines.

The object of the present invention is therefore to eliminate said drawback. This result is obtained mainly due to the fact that, to the electric line there is associated a vibration damping device having a damping coefficient of 5 to 15% for frequencies of the order of 1 Hz.

More particularly, said damping device is anchored to the cable forming the catenary in a position substantially at the centre of each bay.

A damping device particularly suited for this purpose consists of a messenger cable anchored, substantially at its centre, to a clamp of connection to the electric line and carrying at the two ends springing counterweights.

In actual fact, it is already known to dampen the vibrations on conductors of high-voltage overhead electric lines by means of damping devices of this type, formed in particular of a messenger cable carrying at its ends springing counterweights, as described for example in US-A-3,432,610, or of masses fixed at the ends of rods springing in respect of a fixed anchor clamp, as described in US-A-4,167,641. It should be noted however that, in the case of these conductors, the problem having to be solved is totally different, since it is here a question of damping, in the sense of reducing, the vibrations produced, in a persistent manner, by an energy continuously transmitted to the electric conductor, particularly the energy of the wind. These vibrations are in the frequency range up to 100 Hz, whereby they require damping devices which respond properly to such frequency levels.

In the case of the present invention, to start with, much lower vibration frequencies are involved, particularly in the neighbourhood of 1 Hz, which are produced by free oscillations and which tend furthermore to self-dampen in about ten seconds. The problem does not therefore consist in reducing some persistent vibrations, but in bringing down to zero in a very short time - particularly in less than 2 seconds, that is, less than the time elapsing between the passage of the first and the passage of the second pantograph - the oscillation or vibration on the line.

In order to solve this problem the invention therefore proposes to use a vibration damping device, of the type with messenger cable anchored at its centre and carrying counterweights at the ends, which is essentially characterized in that its mass is 1/15 to 1/30 the mass of the electric line of one bay, that is, the mass of the catenary suspension cable added to the mass of the contact conductor and to the mass of the hangers for suspending said conductor to the catenary, included between two successive poles supporting the line.

More particularly, the damping device according to the invention is formed of a messenger cable of considerable length, for instance exceeding 1 m, and the counterweights at the ends of said cable consist of two identical spheric bodies, having a weight of 3.5 to 4 kg, preferably of 3.7 kg.

Further characteristics and advantages of the present invention will anyhow be more evident from the following detailed description of a preferred embodiment thereof, illustrated by way of example on the accompanying drawings, in which:

Fig. 1 shows very diagrammatically an overhead electric line for railways; and

Fig. 2 is a detailed side view of a vibration damping device used on a line as that shown in figure 1.

As shown in the drawings, a railway electric line is formed of a cable 1, arranged in a catenary configuration, to which a conductor 2 is suspended by means of hangers 3, positioned at regular intervals - for instance one every 1 to 5 m - which support it on a straight alignment, parallel to the railway track.

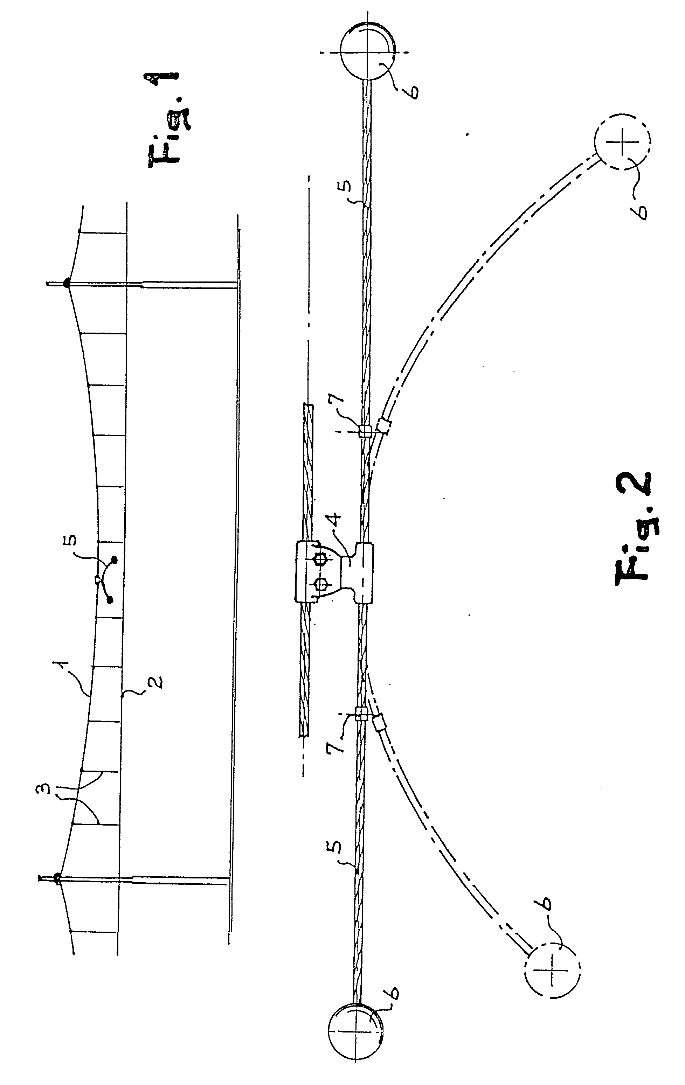

Onto the catenary of the line there is anchored a vibration damping device, consisting (as shown in figure 2) of a clamp 4 of anchorage to the conductor 1, of a messenger cable 5 and of a pair of counterweights 6 fixed to the ends of the messenger cable 5.

According to a first characteristic of the invention, the assembly of the vibration damping device has a mass of the order of 1/15 to 1/30 the mass of the electric line of one bay, and is anchored to the cable 1 substantially at the centre of the bay. With a weight of the line -including the cable 1, the conductor 2 and the hangers 3 - of approx. 5 kg/m, and a length of the bay of the line - from one support pole to the next - of 60 m, the overall weight of the bay will be of the order of 300 kg; consequently, the damping device will have an overall weight of the order of 10 to 20 kg.

According to a further characteristic of the invention, the messenger cable 5 is formed of a plait of 19 wires of 3.10 mm, having a diameter of 15.5 mm. Its length is considerably greater than those of known dampers of this type, for instance greater than 1 m. Moreover, according to a preferred embodiment, the two sections of the messenger cable, extending into opposite directions from the anchor clamp 4, have different lengths.

In a specific embodiment, the messenger cable has, on one side, a length $l_1$ between 75 and 80 cm, for example of 77 cm, and on the other side, a length $l_2$ between 85 and 90 cm, for example of 87 cm.

Each of the two sections of the messenger cable carries a clamping bush 7 mounted on its half closest to the clamp 4; the function of said bush is to clamp together the single wires of the cable, so as to increase the reciprocal sliding friction of said wires when the cable bends, thereby improving the damping effect of the oscillations.

The counterweights 6 usually consist of simple identical spheric bodies, having a weight between 3.5 and 4 kg, for example of 3.7 kg, which are fixed to the ends of the messenger cable 5.

It should be noted that, with a structure of the type described heretofore, the damping device - once it is mounted on the electric line, and in rest conditions - takes up a configuration which considerably differs from the theoretical one (shown in full lines) and which leads the two sections of the messenger cable to notably bend downwards, for instance as shown in dash-and-dot lines in figure 2.

This configuration is in turn very different from that of the known vibration dampers, which instead take up a position very close to the theoretical one on account of their far greater stiffness.

A damping device of this type has, in respect of the electric line being considered and for vibration frequencies of the order of 1 Hz, a damping coefficient between 5% and 15%, which practically allows to annul the free oscillation or vibration movement of the line, produced by the passage of the first pantograph, in a time of about 2 sec, thus certainly before the passage of the second pantograph.

## Claims

1) Device for damping the free oscillations on the overhead electric line of a railway comprising a catenary suspension cable, a contact conductor positioned essentially on a straight line and a plurality of hangers for suspending said conductor to the catenary, said device being of the type formed of a messenger cable anchored, substantially at its centre, to a clamp of connection to the electric line and carrying at its ends springing counterweights, and being characterized by the fact that its mass is 1/15 to 1/30 the mass of the electric line of one bay.

2) Damping device as in claim 1), wherein the messenger cable is formed of a 19-wire plait, the length of which exceeds on the whole 1 m.

3) Damping device as in claim 2), wherein the messenger cable is formed of a plait of 19 wires of 3.10 mm, having a diameter of 15.5 mm.

4) Damping device as in claim 1), wherein the two sections of the messenger cable extending into opposite directions from the anchor clamp have different lengths.

5) Damping device as in claim 4), wherein one of the two sections of the messenger cable has a length between 75 and 80 cm, preferably of 77 cm, while the other section has a length between 85 and 90 cm, preferably of 87 cm.

6) Damping device as in claim 1), wherein each of the two sections of the messenger cable, extending in opposite directions from the anchor clamp, carries a clamping bush mounted on its half closest to the clamp.

7) Damping device as in claim 1), wherein to each end of the messenger cable there are fixed counterweights, in the form of identical spheric bodies, having a mass between 3.5 and 4 kg, preferably of 3.7 kg.

8) Overhead electric line of a railway, comprising a catenary suspension cable, a contact conductor positioned essentially on a straight line, and a plurality of hangers for suspending said conductor to the catenary, characterized in that a vibration damping device is associated thereto, having a damping coefficient of 5 to 15% for frequencies of the order of 1 Hz.

9) Electric line as in claim 8), wherein said damping device is anchored onto the cable forming the catenary, in a substantially central position of each bay.

Fig. 1

Fig. 2

EP 0 345 567 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| A,D | US-A-4167646 (MATHIEU)<br>* column 5, lines 43 - 62 *<br>* column 6, lines 11 - 39; figures 1, 3 * | 1, 4 | B60M1/234<br>H02G7/14 |
| A,D | US-A-3432610 (R. CLAREN)<br>* column 4, line 1 - column 5, line 40; claims 1, 7; figures 1, 2 * | 1, 2, 4, 5 | |

TECHNICAL FIELDS
SEARCHED (Int. Cl.4 )

B60M1/00
H02G7/00

The present search report has been drawn up for all claims

| Place of search | Date of completion of the search | Examiner |
|---|---|---|
| THE HAGUE | 23 AUGUST 1989 | RIEUTORT A.S. |

EPO FORM 1503 03.82 (P0401)